# EUROPÄISCHE PATENTSCHRIFT

(11) **EP 1 489 056 B1**
(45) Veröffentlichungstag und Bekanntmachung des Hinweises auf die Patenterteilung: **18.11.2009**
(21) Anmeldenummer: 04012568.4
(22) Anmeldetag: 27.05.2004
(51) Int. Cl.: C04B 14/24, C04B 26/32, E04F 13/02, F24J 2/34, C09D 1/04, C09D 7/12, C08K 7/26

(54) **Putzsystem für eine mineralische Wand**
Render system for a mineral wall
Système d'enduits pour mur minéral

(30) Priorität: 16.06.2003 DE 10327347
(43) Veröffentlichungstag der Anmeldung: 22.12.2004
(73) Patentinhaber: Schuster, Lothar, Dipl.-Ing., 40627 Düsseldorf (DE)
(72) Erfinder: Schuster, Lothar, Dipl.-Ing., 40627 Düsseldorf (DE)
(74) Vertreter: COHAUSZ DAWIDOWICZ HANNIG & SOZIEN

(56) Entgegenhaltungen:
- EP-A- 1 235 042
- EP-A- 1 589 066
- WO-A-02/083326
- DE-A1- 2 820 536
- DE-A1- 3 409 644
- DE-A1- 3 524 115
- DE-A1- 3 808 482
- DE-A1- 4 136 520
- DE-A1- 10 152 060
- DE-A1- 19 522 645
- DE-A1-102005 023 592
- FR-A1- 2 307 092
- US-A- 4 303 061

## Beschreibung

Die Erfindung betrifft ein Putzsystem für eine mineralische Wand bestehend aus einem luftdurchlässigen, porösen Grundputz und einem Oberputz für den Abschluss des Grundputzes.

Es ist bekannt, die Außenfläche einer Wand mit einem Grundputz von ca. 2 cm Dicke zu versehen und über den Grundputz noch einen Oberputz von ca. 1 bis 6 mm anzubringen, der dem Schutz des Grundputzes und der Verbesserung der Optik dient. Dieser bekannte Wandaufbau ist nicht geeignet, Sonnenstrahlung in einem bedeutenden Maß zu absorbieren und nachhaltig zu speichern.

Aus der DE 101 52 060 A1 ist ein Dekorationsputz bekannt, in dem als Füllstoff große Vollglaskugeln eingemischt sind, um einen Schmuckputz zu bilden. Ferner ist es aus der EP-A-1 235 042 bekannt, auf einen Grobputz ein Vlies zu kleben, wobei der Kleber Keramik-Glashohlkugeln aufweist. Der Grobputz ist für Fassaden mit 2 -3 cm Aufbauhöhe, über dessen außen offene Großporen ein Gewebevlies klebt, um darunter die Porenluftzirkulation zu ermöglichen. Um die Kleberschicht (< 1 mm) für das Vlies lichtdurchlässig zu halten wird eine Acrylfarbe mit Glashohlkugelzuschlag als Klebermaterial empfohlen. Das geklebte Vlies wird anschließend mit lichtdurchlässigen oder pigmentierten Schlussanstrichen beschichtet.

Die WO 02/083326 A1 beschreibt einen wärmedämmenden Anstrich zum Erhalt einer Wärmeisolierung. Sie lehrt, den Anstrich mit einem Farbroller oder einer Sprühpistole aufzutragen, was bei einem Putz nicht möglich.

Die DE 3409644 A1 betrifft eine mineralische Dämmputzschicht mit Leichtbaustoffzuschlägen, die u.a. auch Glashohlkugelfüllstoffe sein können, um Ausnehmungen in Mineralfaser-Dämmplatten mit Dämmputz zu füllen und die Dämmplatten mit Dämmputz zu überziehen. Die Dämmputzschicht dient als Träger für den später noch aufzutragenden Fassadenputz, der als Oberputz betrachtet werden kann, vgl. Fig. 1. Die DE 3409644 A1 beschreibt damit einen Dämmputz als Träger eines Fassadenputzes.

Die DE 35 24 115 A1 beschreibt einen Leichtbau-Verbundstoff als Isolierputz (Spachtelmasse) für Leicht-Gipskartonplatten oder als mit Papier- bzw. Karton kaschierte Verkleidungsplatten zum Hausausbau. Die Verbesserung der Dämmwirkung erfolgt durch Aufschäumen und u. a. auch mit Mikrohohlglaskugeln.

Weiterhin offenbart die DE 41 36 520 A1 einen Putz-Materialverbund zur Lichtdurchlässigkeitssteuerung mit Glashohlkörpern in kugeliger, ovaler oder länglicher Form. Der Putz wird auf Fassaden oder lichtdurchlässigen Wärmedämmmaterialschichten zur Transparenzverminderung aufgetragen.

Aufgabe der Erfindung ist es, ein Putzsystem und insbesondere einen Wandputzaufbau zu schaffen, der dazu geeignet ist, Umweltwärme und Solarstrahlung in einem hohen Maße zu absorbieren, die Wärme zur Wand weiterzuleiten und zu speichern.

Diese Aufgabe wird erfindungsgemäß dadurch gelöst, dass der Oberputz Mikrohohlglaskugeln in einer Volumenmenge von 5 bis 70 Prozent, insbesondere von 10 bis 30 Prozent, aufweist, wobei die Mikrohohlglaskugeln einen Außendurchmesser von 2 bis 100 µm und eine Wandstärke von 0,5 bis 3 µm aufweisen.

Hierdurch wird der Eintrag von Umwelt-Strahlungswärme in die wärmespeicherfähige Wandkonstruktion verbessert und die im Außenbauteil gespeicherte Energie erhöht. Die Temperatur an der Putzaußenfläche und Wärmeverlustströme an der Oberfläche werden durch die verringerte Temperaturdifferenz zur Umgebung hin verringert (Wärmeverlustverringerung durch Verdunstung, Konvektion und Abstrahlung).

Der mit Wärmebubbles dotierte Oberputz ist hinsichtlich seiner spezifischen Dichte leichter und durch die hohlen Glassphäroide von geringer Masse werden die Putzoberflächen thermisch flink. Temperaturen werden seitlich gut in den Untergrund abgeleitet und die Temperaturverteilung auf der Putzfläche wird gleichmäßiger.

Wegen der Vielzahl diffusionsdichter Glashohlkügelchen wird das Ein- und Ausdiffundieren von Feuchte gebremst bzw. der Verdunstungs-Wärmeabfluss reduziert. Die Putzschicht bleibt diffusionsoffen.

Infolge der großen Zahl von diffusionsdichten Mikro-Glashohlkügelchen werden Mikrorissbildungen in der Putzmatrix reduziert. Die Farbstabilität, die chemische Resistenz gegen Luftverschmutzungen, Schmutz- und Wasserabweisung und die Elastizität werden verbessert.

Durch die interne große Glasoberfläche der Wärmebubbles in der Putzschicht wird dem Wachstum von Mikroorganismen, zum Beispiel von Moosen, Algen etc. zum Teil der Nährboden entzogen und die Putzoberfläche altert weniger schnell.

Der mit Wärmebubbles dotierte Oberputz lässt durch seine hohlen Glassphäroide Umweltwärmestrahlung tiefer einwirken (Licht geht fast ungehindert durch Glas hindurch), beschleunigt den Transfer von Absorptionswärme in tiefere Wandschichten und die insgesamt gespeicherte Wärmeenergie im Außenbauteil wird größer.

Der Oberputz leitet absorbierte Wärme vorrangig schneller in Wandkonstruktionen ein, wenn die übliche Grundputzschicht (zum Beispiel Kalkzementputze ca. 1,5 bis 3 cm dick) vorrangig durch beigemischte Porenbildner (zum Beispiel Schaumglas) und spezielle Sieblinienklasse (Einkornzusammensetzung) wärmetechnisch gering leitend und gut luftdurchlässig gemacht wird.

Alte zu sanierende Fassadenputzschichten können unter Verzicht auf den optimal hohen Umweltwärmeeintrag nur mit der Oberputzschicht überputzt und somit auch wärmetechnisch saniert werden.

Verschmutzte oder insgesamt gealterte Oberputzflächen können mit farblich angepassten, artgleichen Farbanstrichen in die gleichfalls Wärmebubbles eingemischt sind, repariert, farblich verschönert und wärmetechnisch saniert bzw. instand gesetzt werden.

Mit Wärmebubbles dotierte Oberputze verringern die spezifische Dichte so, dass das Putzsystem leichter wird. Auch wird die Elastizität des Putzsystems verbessert.

Der Oberputz verhindert den inneren Aufbau hoher Luft- und Dampfdrücke oder thermische Spannungen. Die luftdurchlässige poröse Grundschicht leitet Drücke und Spannungen seitlich gut ab. Weder Blasen, Risse oder Abplatzungen können entstehen.

Mit Wärmebubbles dotierte Oberputze decken als Putzsystem (Oberputz- und Grundputzschicht in Kombination) übliche Putzfunktionen gut ab, verbessern sie teilweise wesentlich und bewirken zusätzlich Wärmeschutzwirkungen, die im wesentlichen nicht auf einer verringerten Wärmeleitfähigkeit des Putzsystems basiert, sondern trotz großer Rohdichten den Temperatur-, Feuchte- und Strahlungsaustausch zwischen den Außenbauteilen und der Außenumgebung wärmetechnisch günstig beeinflusst und Wärmeverluste reduziert.

Ein solches Putzsystem (Oberputz- und Grundschicht im Kombination) nutzt die Baustofffeuchte zum schnellen Umweltwärme-Abtransport in tiefere Wandschichten aus. Vom Oberputz absorbierte Solarstrahlung erwärmt die Porenluft der Grundschicht und diese transferiert die Wärmeenergie vorzugsweise feuchtegekoppelt in tiefere Speicherschichten der Wandkonstruktion. Die luftdurchlässig konditionierte Grundschichtmatrix trägt unter Ausnutzung bauphysikalischer Gesetzmäßigkeiten zur schnellen verlustarmen Wärmeableitung aus dem "wärmeren" Oberputz in den im Regelfall "kälteren" Wandspeicher bei.

Das Putzsystem (Oberputz- und Grundputzschicht) verringert die Ableitung von Wärmeenergie aus der Wandkonstruktion an die kältere Außenumgebung. Im Regelfall kann die Speicherwärme vorzugsweise nur wieder über die geringer leitenden Baustoffstege des porösen Putzsystems nach außen abfließen.

Vorteilhafte Ausgestaltungen der Erfindung sind in den Unteransprüchen aufgeführt.

Ausführungsbeispiele der Erfindung werden im folgenden näher beschrieben.

Auf die Außenseite einer mineralischen Hauswand, zum Beispiel aus Mauersteinen oder Beton, wird ein vorzugsweise auf Kalkzementmörtel basierender Grundputz von mindestens 1,5 cm Dicke aufgebracht, der in hohem Maße luftdurchlässig und porös ist. Die Poren entstehen zum Beispiel durch Beigabe von Porenbildnern wie Schaumglas und durch die Verwendung einer speziellen Sieblinienklasse (Kornzusammensetzung).

Oben auf die Außenseite des Grundputzes (Wärme-Transmissionsputz) wird ein Oberputz (Strahlungs- Konversionsputz) in einer Dicke von 1 bis 8 mm insbesondere von 1 bis 6 mm aufgebracht. Der Oberputz ist zum Beispiel ein Kunstharzputz, ein Siliconharzputz, ein Dispersions-Silikatputz oder ein Mineralputz. Im Oberputz sind als weiterer Zuschlagstoff Mikrohohlglaskugeln in einer Volumenmenge von 5 bis 70 Prozent vorzugsweise von 10 bis 30 Prozent eingebracht. Die Mikrohohlglaskugeln besitzen einen Außendurchmesser zwischen 2 bis 100 µm und eine Wandstärke von rund 0,5 bis 3 µm.

Die Mikrohohlglaskugeln haben die Wirkung, verstärkt Umweltwärme zu absorbieren, sie verlustarm und schnell in speicherfähige Außenbauteile zu verteilen und die gespeicherte Wärmeenergie so zu vergrößern, dass sich außen an der Oberputzseite die Oberflächentemperatur verringert und somit der Wärmeverlust an die Umwelt gering bleibt.

Die Wasserdampfwanderung (Dampfdiffusion) in porösen Baustoffen erfolgt unter dem Einfluss eines Temperaturgefälles von "warm" nach "kalt" oder unter dem Einfluss eines Dampfdruckgefälles von "feucht" nach "trocken". Feuchte kann mehr Wärme speichern als übliche Baustoffe. Die Wasserdampfaufnahmefähigkeit der Porenluft im luftdurchlässigen Grundputz steigt mit zunehmender Erwärmung.

Vom Oberputz absorbierte Umweltstrahlung (Sonnenschein und diffuse Lichtstrahlung) erwärmt die Porenluft der unten angrenzenden luftdurchlässigen Grundputzschicht. Die oben absorbierte Strahlungsenergie wandert im Grundputz unter dem Einfluss des Temperatur- und/oder Dampfdruckgefälles vorzugsweise mit der erwärmten Porenluft von der "wärmeren" Oberputzseite in die "kältere" Wandkonstruktion. Nachts bei umgekehrtem Temperaturgefälle kann Wandwärme nur gebremst, vorzugsweise nur über die geringer leitenden Baustoffstege im Putzsystem zurückfließen.

Somit wird durch die erfindungsgemäße Lösung ein hochwirksamer Sonnenenergiekollektor geschaffen.

Alternativ kann auf die Außenseite des Oberputzes ein Farbanstrich angebracht sein (zum Beispiel Verschönerungs- oder Sanieranstrich), in dem artgleiche Mikrohohlglaskugeln eingemischt sind. Hierdurch wird die Absorption der (Sonnen-) Strahlungsenergie noch weiter erhöht.

In einer Alternative kann der mit Mikrohohlglaskügelchen versehene Oberputz auch ein Innenputz sein. Mit Wärmebubbles dotierte Innenputze schaffen auf raumseitigen Wand- und Deckenflächen eine Art Wärme- und Raumklimaschutz. Die Raumluftqualität, das Raumklima und die thermische Behaglichkeit werden besser, die Schimmelpilz- und Stockfleckenbildung wird gehemmt. Allergiker oder Asthmatiker atmen beschwerdefreier und Rheumatiker erleben ein verbessertes Wohlbefinden.

In weiteren Alternativen kann die Grundschicht variabel ausgeführt werden, zum Beispiel durch mineralische, hoch poröse, luftdurchlässige Platten (zum Beispiel 1,5 bis 3 cm dick), die mit einer geeigneten gut wärmeleitenden Haftbrücke (zum Beispiel gut wärmeleitendem [Fliesen-] Kleber etc.) auf den Fassaden angebracht sind und die Oberputzschicht in Kombination eines Armierungsgewebes aufgebracht wird. Auch kann die Grundschicht variabel ausgeführt sein, zum Beispiel durch hoch poröse, gut luftdurchlässige Dämmstoffplatten (zum Beispiel 1, 5 bis 3 cm dick), die mit einer geeigneten gut wärmeleitenden Haftbrücke (zum Beispiel gut wärmeleitendem [Dämmstoff-] Kleber) auf den Fassaden angebracht sind und die Oberputzschicht in Kombination eines Armierungsgewebes aufgebracht wird (schlankes WDV-System [S-WDVS].

## Patentansprüche

1. Putzsystem für eine mineralische Wand bestehend aus einem luftdurchlässigen, porösen Grundputz und einem Oberputz für den Abschluss des Grundputzes, **dadurch gekennzeichnet, dass** der Oberputz Mikrohohlglaskugeln in einer Volumenmenge von 5 bis 70 Prozent, insbesondere von 10 bis 30 Prozent, aufweist, wobei die Mikrohohlglaskugeln einen Außendurchmesser von 2 bis 100 µm und eine Wandstärke von 0,5 bis 3 µm aufweisen.

2. Putzsystem nach Anspruch 1, **dadurch gekennzeichnet, dass** der Oberputz ein Kunstharzputz, ein Siliconharzputz, ein Dispersions-Silikatputz oder ein Mineralputz ist.

3. Putzsystem nach einem der vorherigen Ansprüche, **dadurch gekennzeichnet, dass** der Oberputz eine Schichtstärke von 1 bis 8 mm aufweist.

4. Putzsystem nach einem der vorherigen Ansprüche, **dadurch gekennzeichnet, dass** auf dem Oberputz ein Farbanstrich angebracht ist, in dem Mikrohohlglaskugeln eingemischt sind.

5. Putzsystem nach einem der vorherigen Ansprüche, **dadurch gekennzeichnet, dass** dem Grundputz Porenbildner beigemischt sind.

6. Putzsystem nach Anspruch 5, **dadurch gekennzeichnet, dass** die Poren des Grundputzes durch Schaumglaszuschlag und/oder durch Körnungen (eine Sieblinienklasse) gebildet sind.

7. Putzsystem nach einem der vorherigen Ansprüche, **dadurch gekennzeichnet, dass** der Grundputz mineralische, hoch poröse, luftdurchlässige Platten aufweist, die mit einer gut wärmeleitenden Haftbrücke wie gut wärmeleitendem Kleber auf den Fassaden angebracht sind.

8. Putzsystem nach einem der vorherigen Ansprüche, **dadurch gekennzeichnet, dass** der Grundputz mineralische, hoch poröse, luftdurchlässige Dämmstoffplatten aufweist, die mit einer gut wärmeleitenden Haftbrücke wie gut wärmeleitendem Kleber auf den Fassaden angebracht sind.

9. Putzsystem nach Anspruch 7 oder 8, **dadurch gekennzeichnet, dass** der Oberputz mit einem Armierungsgewebe aufgebracht ist.

## Claims

1. Render system for a mineral wall, consisting of an air-permeable, porous levelling render and a skim coat finishing the levelling render, **characterized in that** the skim coat has hollow glass microspheres in an amount by volume of 5 to 70%, in particular of 10 to 30%, the hollow glass microspheres having an external diameter of 2 to 100 µm and a wall thickness of 0.5 to 3 µm.

2. Render system according to Claim 1, **characterized in that** the skim coat is a synthetic resin render, a silicone resin render, a dispersion silicate render or a mineral render.

3. Render system according to either of the preceding claims, **characterized in that** the skim coat has a layer thickness of 1 to 8 mm.

4. Render system according to any of the preceding claims, **characterized in that** a paint coat into which hollow glass microspheres are mixed is applied to the skim coat.

5. Render system according to any of the preceding claims, **characterized in that** air-entraining agents are mixed with the levelling render.

6. Render system according to Claim 5, **characterized in that** the pores of the levelling render are formed by a foamed glass additive and/or by grains (a grading curve class).

7. Render system according to any of the preceding claims, **characterized in that** the levelling render has mineral, highly porous, air-permeable panels which are applied to the façades with an adhesive bond having good thermal conductivity, such as an adhesive having good thermal conductivity.

8. Render system according to any of the preceding claims, **characterized in that** the levelling render has mineral, highly porous, air-permeable insulating panels which are applied to the façades with an adhesive bond having good thermal conductivity, such as an adhesive having good thermal conductivity.

9. Render system according to Claim 7 or 8,
**characterized in that** the skim coat is applied with a reinforcing fabric.

## Revendications

1. Système d'enduit pour paroi minérale, constitué d'un enduit de base poreux perméable à l'air et d'un enduit supérieur qui ferme l'enduit de base,
**caractérisé en ce que**
l'enduit supérieur présente des microbilles de verre creuses en proportion volumique de 5 à 70 pourcent et en particulier de 10 à 30 pourcent, les microbilles de verre creuses présentant un diamètre extérieur de 2 à 100 µm et une épaisseur de paroi de 0,5 à 3 µm.

2. Système d'enduit selon la revendication 1, **caractérisé en ce que** l'enduit supérieur est un enduit en résine synthétique, un enduit en résine de silicone, un enduit en silicate dispersé ou un enduit minéral.

3. Système d'enduit selon l'une des revendications précédentes, **caractérisé en ce que** la couche d'enduit supérieur présente une épaisseur de 1 à 8 mm.

4. Système d'enduit selon l'une des revendications précédentes, **caractérisé en ce qu'**une couche de peinture dans laquelle des microbilles de verre creuses sont mélangées est appliquée sur l'enduit supérieur.

5. Système d'enduit selon l'une des revendications précédentes, **caractérisé en ce que** des agents de formation de pores sont mélangés à l'enduit de base.

6. Système d'enduit selon la revendication 5, **caractérisé en ce que** les pores de l'enduit de base sont formés par addition de verre moussé et/ou par des grains (classe linéaire de tamisage).

7. Système d'enduit selon l'une des revendications précédentes, **caractérisé en ce que** l'enduit de base présente des plaques minérales, fortement poreuses et perméables à l'air qui sont appliquées sur la façade avec un pont d'adhérence bon conducteur de chaleur, par exemple un adhésif bon conducteur de chaleur.

8. Système d'enduit selon l'une des revendications précédentes, **caractérisé en ce que** l'enduit de base présente des plaques poreuses et perméables à l'air en matière isolante qui sont appliquées sur la façade avec un pont d'adhérence bon conducteur de chaleur, par exemple un adhésif bon conducteur de chaleur.

9. Système d'enduit selon les revendications 7 ou 8, **caractérisé en ce que** l'enduit supérieur est appliqué avec un tissu d'armature.
